Europäisches Patentamt

**European Patent Office**

Office européen des brevets

(11) Numéro de publication: **0 178 954 B1**

## (12) FASCICULE DE BREVET EUROPEEN

(45) Date de publication de fascicule du brevet:
09.10.91

(51) Int. Cl.⁵: **H04N 5/335**, H04N 3/15

(21) Numéro de dépôt: 85401098.0

(22) Date de dépôt: 04.06.85

(54) **Procédé et dispositif pour l'exploration d'une fenêtre de la zone image d'un dispositif à transfert de charges du type à transfert de trames.**

(30) Priorité: 15.06.84 FR 8409390

(43) Date de publication de la demande:
23.04.86 Bulletin 86/17

(45) Mention de la délivrance du brevet:
09.10.91 Bulletin 91/41

(84) Etats contractants désignés:
DE FR GB IT

(56) Documents cités:
GB-A- 2 113 949
US-A- 4 245 164

(73) Titulaire: **SOCIETE DE FABRICATION D'INS-TRUMENTS DE MESURE (S.F.I.M.)**
**13, avenue Marcel Ramolfo-Garnier**
**F-91301 Massy(FR)**

(72) Inventeur: **Roy, Jean-Claude**
**47, avenue de la Paix**
**F-94260 Fresnes(FR)**
Inventeur: **Seugnet, Patrick**
**7, rue Achille Garnon**
**F-92330 Sceaux(FR)**

(74) Mandataire: **Martin, Jean-Jacques et al**
**Cabinet REGIMBEAU 26, Avenue Kléber**
**F-75116 Paris(FR)**

## Description

La présente invention concerne un procédé, et un dispositif pour l'exploration d'une fenêtre de la zone image d'un dispositif à transfert de charges du type à transfert de trames.

Classiquement, les dispositifs à transfert de charges de ce type comprennent :

- une zone image, disposée dans le plan focal d'un dispositif dioptrique, formée d'une matrice de $m$ lignes de $n$ sites photosensibles,
- une zone mémoire adjacente, aveugle, formée d'une matrice de $m$ lignes de $n$ positions mémoire,
- un registre à décalage à $n$ positions.

Pour réaliser le transfert de trames, il est prévu des circuits de balayage comprenant :

- des premiers moyens décaleurs, pour effectuer parallèlement dans chaque colonne de la zone image un transfert de charges, ligne par ligne, en direction de la zone mémoire,
- des seconds moyens décaleurs, pour effectuer parallèlement dans chaque colonne de la zone mémoire un transfert de charges, ligne par ligne, en direction du registre à décalage,
- des troisièmes moyens décaleurs, pour effectuer une lecture série du registre à décalage à une fréquence d'échantillonnage donnée, de manière à restituer un signal vidéo en sortie.

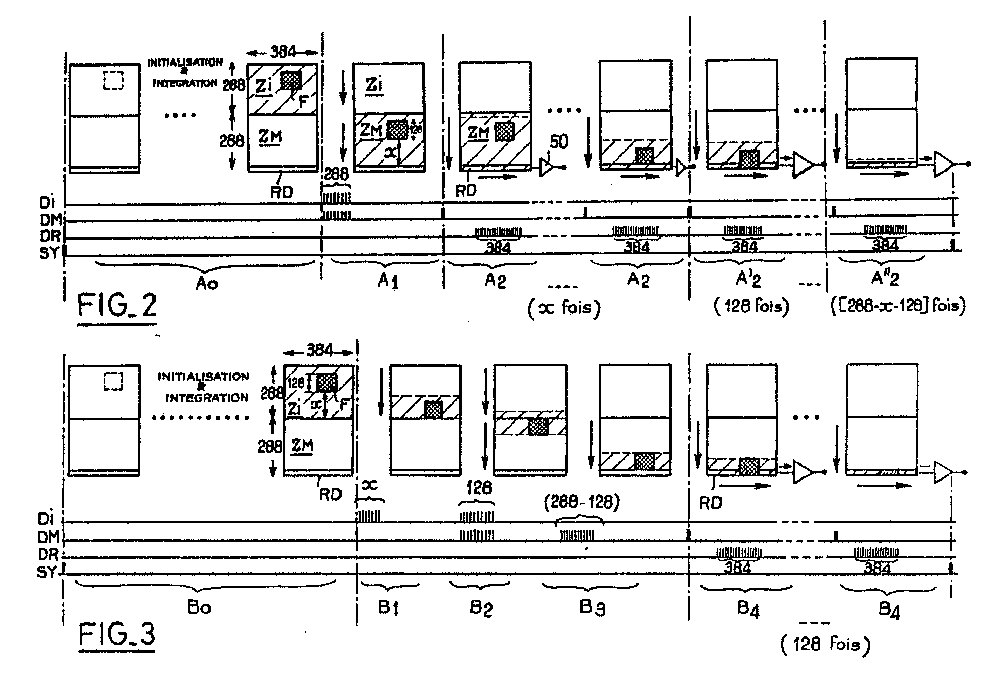

Classiquement, l'exploration de la zone image est réalisée ligne par ligne de la manière décrite ci-dessous, en référence à la figure 2 qui illustre ce mode opératoire de la technique antérieure (on prendra l'exemple d'une matrice de $m \times n = 288 \times 384$ pixels, correspondant à des dispositifs disponibles dans le commerce, mais toute autre dimension de la matrice est bien entendu envisageable).

Tout d'abord, une phase d'initialisation et d'intégration ($A_0$) permet la formation d'une image (intégration) sur la zone image ZI du dispositif à transfert de charges, après un éventuel "nettoyage" de celle-ci (initialisation) par effacement pour éviter les effets de rémanence.

Ensuite (phase $A_1$), on recopie entièrement la zone image ZI dans la zone mémoire ZM par actionnement simultané des premiers et des seconds moyens décaleurs précités ; ceci correspond à l'envoi d'un peigne de 288 impulsions sur les entrées DI et DM de ces moyens décaleurs respectifs.

Enfin (phases $A_2$, $A'_2$ et $A''_2$), on décale une ligne de la zone mémoire (impulsion unique sur l'entrée DM) et on lit le registre à décalage RD (peigne de 384 impulsions à l'entrée DR des troisièmes moyens décaleurs), ce qui permet d'obtenir en sortie le signal vidéo correspondant à cette ligne. Ceci est répété pour la ligne suivante, et ainsi de suite jusqu'à épuisement de la zone mémoire. On a alors entièrement transféré la trame, ligne par ligne, et on peut recommencer les étapes précédentes (initialisation, intégration, transfert, lecture ligne à ligne) pour la trame suivante. Ceci correspond à l'envoi d'une impulsion de synchronisation de trame SY.

Pour la fréquence de récurrence des impulsions de synchronisation SY, ainsi que pour la durée d'exploration d'une ligne, on choisit de préférence des valeurs correspondant au standard vidéo européen, à savoir des durées de trame et de ligne de 20 ms (50 Hz) et de 64 $\mu$s, respectivement. De la sorte, on constate que la durée des étapes $A_2$ .... $A''_2$ est au moins égale à $288 \times 0,064 = 18,432$ ms. Si l'on choisit une valeur de 1 MHz pour la fréquence d'horloge des premiers et seconds moyens décaleurs, soit un décalage d'une ligne des zones image et mémoire en 1 $\mu$s, la durée de la phase $A_1$ est au moins égale à $288 \times 0,001 = 0,288$ ms.

Au total, la durée des étapes $A_1$ .... $A''_2$ est d'au moins 18,72 ms. En d'autres termes, entre la fin de l'étape d'intégration (acquisition du signal) et la fin du transfert de la dernière ligne de la trame dans une mémoire de travail (moment où le signal devient exploitable par un calculateur), il se crée un retard pur au moins égal à 18,72 ms, c'est-à-dire du même ordre de grandeur que la période d'échantillonnage (20 ms).

Dans certaines applications, un tel retard pur entre l'acquisition du signal et son stockage en mémoire de travail est inacceptable.

Il en est ainsi dans le cas des systèmes de conduite de tir : le téléguidage du projectile vers la cible impose un asservissement à très faible constante de temps, en raison des vitesses de déplacement très élevées du projectile et, le cas échéant, de la cible.

C'est pourquoi les dispositifs à transferts de charges n'ont été que peu utilisés jusqu'à présent dans ce genre d'applications.

L'un des buts de l'invention est de s'affranchir de cet inconvénient, en réduisant dans des proportions importantes le retard pur inhérent au mode d'exploration classique des dispositifs à transferts de charges. L'invention autorise par là même l'emploi de ces dispositifs dans des systèmes à temps de réponse très brève.

Un autre but de l'invention est de pouvoir allonger la durée de l'étape préalable d'initialisation et d'intégration, en particulier de pouvoir disposer d'un laps de temps suffisant pour la phase d'initialisation (effacement des zones image et mémoire, etc.) ; la technique antérieure limitait ces possibilités, l'étape préalable - nécessairement très courte, par exemple $20-18,72 = 1,28$ ms dans l'exemple précité - étant essentiellement consacrée à la phase de l'intégration.

Enfin, la possibilité de réduire la durée d'intégration à une valeur aussi faible que possible (compte tenu de l'intensité lumineuse reçue) permet de réduire le "bougé" de l'image, contribuant ainsi à augmenter la précision d'ensemble du système. Ceci vaut notamment lorsque les taches lumineuses sont soumises à un calcul de barycentre : tout enregistrement d'une traînée au lieu d'une tache décale en effet le barycentre dans des proportions notables pour un objet lumineux en déplacement rapide (un tel décalage correspondant en fait à un retard d'acquisition supplémentaire).

Le procédé de l'invention s'applique chaque fois que l'on souhaite explorer une fenêtre de p lignes de q pixels, c'est-à-dire chaque fois que l'on ne s'intéresse qu'à une portion déterminée de la zone image. L'invention s'applique en particulier aux dispositifs d'écartométrie ou de poursuite vidéo, où l'on a déjà défini une fenêtre de traitement centrée sur une cible préalablement désignée. La position de la fenêtre à l'intérieur de la zone image et, éventuellement, ses dimensions sont déterminées par le calcul (par exemple un calcul de barycentre) ; elles peuvent être variables d'une trame à la suivante en fonction des mouvements de la cible.

Cette application n'est cependant pas limitative, et l'invention peut être utilisée dans de nombreux traitements d'image vidéo à partir d'un signal obtenu en sortie d'un dispositif à transfert de charges.

A cette fin, le procédé selon l'invention comprend les étapes successives de :
- intégration du flux lumineux frappant les sites photosensibles de la zone image,
- décalage préalable des zones image et mémoire de (m + x) lignes, x étant le nombre de lignes séparant la première ligne de la fenêtre de la frontière entre la zone image et la zone mémoire, de manière à amener cette première ligne de la fenêtre adjacente à la frontière entre la zone mémoire et le registre à décalage,
- exploration séquentielle de la fenêtre, par exécution répétitive, p fois, des étapes suivantes, à une fréquence de ligne donnée :
  - activation des seconds moyens décaleurs, de manière à décaler la zone mémoire d'une ligne,
  - activation des troisièmes moyens décaleurs, de manière à effectuer la lecture série du contenu du registre à décalage.

De préférence, l'étape de décalage préalable comprend les étapes suivantes :
- activation des premiers moyens décaleurs, de manière à décaler la zone image d'un nombre de lignes égal au nombre x de lignes séparant la première ligne de la fenêtre de la frontière entre la zone image et la zone mémoire,
  - activation simultanée des premiers et des seconds moyens décaleurs, de manière à décaler ensemble la zone image et la zone mémoire de p lignes,
  - activation des seconds moyens décaleurs, de manière à décaler la zone mémoire de (m-p) lignes.

On réalise ainsi, dans ce dernier cas, un découplage du fonctionnement des premiers et des seconds moyens décaleurs (qui, dans la technique antérieure, fonctionnent toujours simultanément, aucune autre opération que la recopie de la zone image dans la zone mémoire n'étant envisagée). De cette manière, on ne transfère dans la zone mémoire que les lignes correspondant à la fenêtre à explorer. Les lignes précédant et suivant cette fenêtre ne sont pas recopiées : bien que ces lignes ne fassent l'objet d'aucun traitement vidéo ultérieur, on évite ainsi toute interférence avec les lignes utiles (celles de la fenêtre) lors du transfert ligne à ligne de la zone mémoire vers le registre à décalage de lecture.

En outre, l'étape d'intégration est précédée d'une étape d'effacement des zones image et mémoire, réalisée par activation des premiers et des seconds moyens décaleurs de manière à décaler chacune des zones image et mémoire de m lignes.

Dans ce cas, avantageusement, le début de l'étape d'effacement est retardé par rapport à la fin de l'étape d'exploration de la fenêtre pour la trame précédente, ce retard étant un retard variable, diminuant au fur et à mesure que décroît l'intensité moyenne du flux lumineux frappant la fenêtre, de manière à ajuster à cette intensité la durée de l'étape d'intégration consécutive.

On sait en effet que les dispositifs à transfert de charges sont très sensibles aux phénomènes de surexposition, et sujets à des phénomènes d'éblouissement. Cette caractéristique de l'invention permet de réduire en tant que de besoin l'exposition de la zone image, sans pour autant créer de retard d'acquisition supplémentaire.

Enfin, avantageusement, les troisièmes moyens décaleurs peuvent être activés, au cours d'une même lecture du registre à décalage, à deux fréquences de fonctionnement, à savoir une frequence lente correspondant aux q pixels utiles de la ligne, et une fréquence rapide correspondant aux n-q autres pixels.

La fréquence rapide est par exemple double de la fréquence lente.

De cette manière, pour une même durée totale d'exploration de la ligne (64 μs), on accède plus rapidement aux pixels utiles, et surtout on peut lire ceux-ci à une cadence plus lente, donc en minimisant l'altération du signal correspondant.

L'invention concerne également un circuit de balayage pour la mise en oeuvre du procédé précédemment exposé, et comportant, selon l'invention, un circuit de cadencement coopérant :

- avec les premiers et seconds moyens décaleurs précités dans une première phase, pour réaliser un décalage préalable des zones image et mémoire d'un nombre prédéterminé de lignes,
- avec les seconds et troisièmes moyens décaleurs dans une seconde phase, de manière à explorer séquentiellement, ligne par ligne, une région de la zone mémoire adjacente au registre à décalage, cette région correspondant à une fenêtre utile, de dimensions réduites, initialement contenue à l'intérieur de la zone image.

De préférence, le circuit de cadencement coopère également, dans une phase préalable d'effacement précédant l'étape d'intégration, avec les premiers et seconds moyens décaleurs pour réaliser un décalage de chacune des zones image et mémoire de m lignes. Il est avantageusement prévu, dans ce cas, des moyens d'adaptation de sensibilité du dispositif, aptes à retarder le début de la phase d'effacement par rapport à la fin de la phase d'exploration de la fenêtre d'une durée variable, croissante avec l'intensité moyenne du flux lumineux frappant la fenêtre, de manière à ajuster à cette intensité la durée de l'étape d'intégration.

D'autres caractéristiques et avantages de l'invention apparaîtront à la lecture de la description détaillée ci-dessous, faite en référence aux figures annexées sur lesquelles :

- la figure 1 est une vue schématique de l'ensemble du circuit d'imagerie vidéo comprenant le dispositif à transfert de charges, ses circuits de balayage et les circuits de traitement du signal vidéo.
- la figure 2,précitée, illustre,pour la durée d'une trame, les différentes phases de l'exploration de l'image fournie par le dispositif à transfert de charges,
- la figure 3 est homologue de la figure 2, pour le procédé selon l'invention.

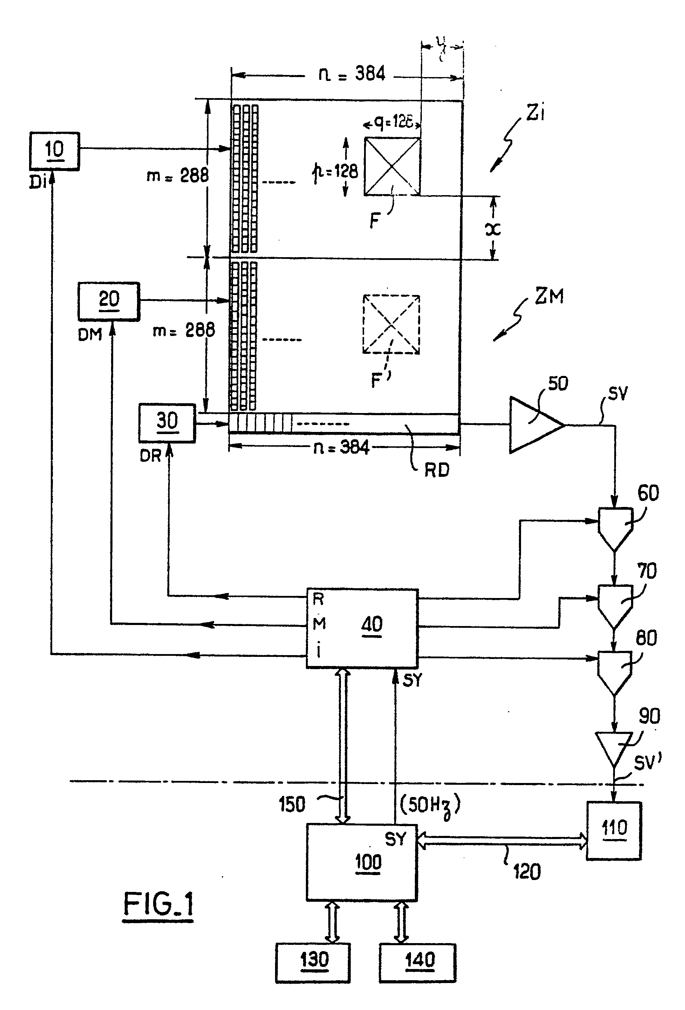

Sur la figure 1, on a représenté un dispositif à transfert de charges du type à transfert de trames, formé d'une zone image ZI, d'une zone mémoire ZM et d'un registre à décalage RD. La zone image ZI, qui est disposée dans le plan focal d'un dispositif dioptrique, et la zone mémoire ZM adjacente, qui est aveugle, sont constituées de façon identique : elles comprennent chacune n = 384 colonnes, chaque colonne étant elle-même constituée par un dispositif à transfert de charges linéaire élémentaire à m = 288 positions.

On dispose ainsi, pour la zone image, d'une matrice de 288 lignes de 384 pixels chacune, et pour la zone mémoire une matrice de 288 x 384 positions mémoire organisées identiquement.

Le registre à décalage RD est formé d'un unique dispositif à transfert de charges élémentaire à 384 positions.

Des premiers moyens décaleurs 10 permettent de déplacer d'une position, en direction de la zone mémoire ZM,le contenu de tous les dispositifs à transfert de charges élémentaires de la zone image. En d'autres termes, on décale d'une ligne vers le bas le contenu de la zone image ZI. Ce décalage est réalisé par envoi d'impulsions à l'entrée DI des moyens décaleurs 10, une impulsion correspondant à un décalage d'une ligne (la durée du décalage est en général de 1 $\mu$s par ligne, correspondant à une fréquence de récurrence des impulsions de 1 MHz).

De la même façon, des seconds moyens décaleurs 20 permettent de décaler le contenu de la zone mémoire ZM en direction du registre à décalage, par application d'impulsions à l'entrée DM, avec la même fréquence d'horloge que pour les premiers moyens décaleurs 10.

Enfin, des troisièmes moyens décaleurs 30 permettent de vider le contenu du registre à décalage RD vers un amplificateur 50, correspondant ainsi à la lecture séquentielle de la ligne chargée dans ce registre. La lecture de celui-ci est réalisée par envoi d'impulsions à l'entrée DR, à une fréquence d'horloge permettant la lecture d'une ligne en 64 $\mu$s.

On peut ainsi prévoir une fréquence unique de fonctionnement de 6 MHz (lecture de 384 pixels en 64 $\mu$s), ou bien deux fréquences de fonctionnement pour une même lecture de ligne : par exemple lecture des 128 pixels utiles à 4 MHz (on réduit ainsi les distorsions apportées au signal) et lecture des 256 autres à 8 MHz.

Les différents moyens décaleurs sont alimentés en impulsions par un circuit de cadencement 40, dont la séquence de fonctionnement sera décrite par la suite.

En sortie de l'amplificateur 50, le signal vidéo SV est traité par un étage échantillonneur-bloqueur 60, qui lisse le signal vidéo en éliminant les portions comprises entre les différents pixels. Ensuite, un étage à pincement ("Clamping") ramène au niveau zéro volt les points de référence de noir délivrés par le dispositif à transfert de charges à chaque ligne. L'étage suivant 80 permet un nettoyage ("blanking") par mise au niveau zéro volt du signal vidéo pendant les périodes qui ne correspondent à aucune image. Enfin, un étage 90 effectue l'adaptation d'impédance et de niveau, pour transmettre le signal vidéo SV' ainsi traité vers les circuits permettant son analyse.

Ces circuits d'analyse comprennent un ensemble à micro-processeur 100 relié par une liaison série bi-directionnelle à un convertisseur analogique-numérique 110 assurant la numérisation en temps réel du signal vidéo SV'. Des mémoires vive 130 et morte 140 sont associées à l'ensemble à micro-processeur 100, qui communique également avec le circuit de cadencement 40 au moyen d'une liaison 150 et d'une ligne de transmission d'un signal de synchronisation SY à une fréquence de trame de référence, en général 50 Hz. La liaison 150 permet d'échanger des informations telles que : élimination du signal correspondant à des points défectueux du dispositif à transfert de charges (dont les coordonnées sont conservées dans la mémoire vive 130) par inhibition temporaire de l'échantillonneur bloqueur 60 ; modification du séquencement pour ajuster la sensibilité du dispositif à la lumination moyenne de la scène observée ; détermination des coordonnées et des dimensions d'une fenêtre de traitement F ; échange d'impulsions de synchronisation, notamment synchronisation de fin de ligne.

L'invention s'applique à la situation dans laquelle on souhaite explorer une fenêtre F de dimensions réduites à l'intérieur de la zone image ; cette fenêtre a une dimension de p lignes et q colonnes (par exemple 128 lignes x 128 colonnes) ; elle se trouve à une position de la zone image telle qu'il existe x lignes la séparant de la frontière entre zone image et zone mémoire, et y colonnes la séparant du bord de la zone image correspondant au début des lignes. La référence F' désigne la position homologue de cette fenêtre dans la zone mémoire ZM.

Une première manière d'explorer cette fenêtre est d'employer le mode de balayage de la technique antérieure, comme illustré figure 2 : tout d'abord, après initialisation, les sites photosensibles de la zone image sont excités pendant une phase d'intégration, de manière à transformer la lumination en une charge électrique. A la fin de cette phase d'intégration, la zone image est recopiée dans la zone mémoire (phase $A_1$), par actionnement simultané des premiers et seconds moyens décaleurs, c'est-à-dire par envoi d'un peigne de 288 impulsions (correspondant à un décalage vers le bas de 288 lignes dans chaque zone) sur chacune des entrées DI et DM.

On explore alors ligne par ligne l'image transférée de cette manière dans la zone mémoire : l'exploration de chaque ligne comprend (phase $A_2$) l'envoi d'une impulsion à l'entrée DM pour décaler d'un pas vers le bas la zone mémoire et charger ainsi le registre à décalage avec la ligne adjacente de la zone mémoire, puis envoi d'un peigne de 384 impulsions à l'entrée DR, pour vider ce registre à décalage vers l'amplificateur 50 de signal vidéo.

On a ainsi exploré une ligne. Pour accéder à la fenêtre, il y a lieu tout d'abord de lire les x lignes la séparant du bas de la zone mémoire (phases $A_2$ répétées x fois).

On peut ensuite explorer la fenêtre de la même façon (phases $A'_2$ répétées 128 fois).

Après avoir exploré les lignes utiles (celles de la fenêtre) il faut finir de vider la zone mémoire avant de recommencer un cycle ; ceci est réalisé par exécution de la phase $A''_2$ répétée (288-128)- x fois.

On peut alors recommencer pour la trame suivante (envoi d'une impulsion de synchronisation de trame sur l'entrée SY).

La répartition dans le temps de ces différentes phases est la suivante :
- phase $A_1$ : 288 impulsions de 1 $\mu$s, soit 0,288 ms
- chacune des phases $A_2$, $A'_2$ ou $A''_2$ : 64 $\mu$s.

Au total, la durée des phases $A_1$, $A_2$, .... $A''_2$ est au minimum de 18,72 ms, correspondant à une exploration complète de la zone image ; cette valeur est celle du retard pur que l'invention se propose de réduire.

La durée d'une trame étant constante (20 ms) il reste donc au maximum 1,28 ms pour le temps d'initialisation et d'intégration (phase $A_0$).

Le mode d'exploration, selon l'invention, de la fenêtre F est illustré figure 3 : après l'initialisation et l'intégration (phase $B_0$), on envoie un peigne de x impulsions à l'entrée DI (la valeur de x est connue par le circuit à micro-processeur 100 et transmise au circuit de cadencement par le bus 150), ce qui a pour effet d'amener, dans la zone image, la fenêtre F adjacente à la frontière entre zone image et zone mémoire.

On envoie ensuite, simultanément sur les premiers et seconds moyens décaleurs, un peigne de p = 128 impulsions (phase $B_2$), ce qui a pour effet de recopier dans la zone mémoire la fenêtre, de sorte que sa dernière ligne soit maintenant adjacente à la frontière entre les deux zones.

Ensuite (phase $B_3$), on envoie un peigne de (288 - 128) impulsions sur l'entrée DM des seconds moyens décaleurs, ce qui a pour effet d'amener, dans la zone mémoire, la première ligne de la fenêtre adjacente à la frontière entre zone mémoire et registre à décalage.

On peut alors lire séquentiellement les 128 lignes correspondant à la fenêtre, par exécution de phases $B_4$ chacune identique à la phase $A'_2$ décrite plus haut.

La répartition dans le temps des différentes phases est la suivante :
- phases $B_1$ à $B_3$ : (288 + x) impulsions de 1 $\mu$s, soit une durée comprise entre 0,288 et 0,448 ms,
- ensemble des phases $B_4$ : 128 x 0,064 ms, soit 8,192 ms.

Dans ces conditions, la durée totale minimale des phases $B_1$, $B_2$ ..... $B_4$ est comprise entre 8,48 et 8,64 ms. On constate qu'on a diminué le retard pur à l'acquisition de plus de la moitié de sa valeur antérieurement constatée.

Il reste par ailleurs entre 11,52 et 11,36 ms pour la phase d'initialisation et d'intégration $B_O$.

Ce laps de temps peut être mis à profit pour effectuer des balayages supplémentaires de "nettoyage" de la zone image, évitant les phénomènes de rémanence bien connus pour les dispositifs à transfert de charges.

Pour cela, au début de chaque trame, on efface complètement les zones image et mémoire en prévoyant un transfert complet des zones image et mémoire, mais sans aucune lecture du registre à décalage. Ce transfert représente une évacuation rapide des charges accumulées dans ces deux zones.

Pour éviter tout risque d'éblouissement, on prévoit un ajustement automatique de sensibilité du dispositif pour réduire la durée de la phase d'intégration en cas de lumination excessive.

Pour ajuster la sensibilité du dispositif, on donne au transfert de nettoyage une position variable dans le temps, c'est-à-dire qu'on n'effectue pas nécessairement ce transfert en début de trame (ce début de trame étant repéré par le signal de synchronisation SY), mais on peut le retarder d'une valeur d'autant plus élevée que l'on veut réduire le temps d'intégration, donc diminuer la sensibilité du dispositif.

Cet ajustement de la position temporelle du transfert de nettoyage est déterminé par les moyens de séquencement 40, sous contrôle du circuit 100 à micro-processeur qui analyse l'image.

On notera que la fréquence de trame , qui correspond à la périodicité du rafraîchissement de l'information traité par le micro-processeur 100, reste inchangée malgré la variation du temps d'intégration, et reste toujours fixée à 20 ms dans l'exemple choisi, ce qui laisse toujours le même temps au calculateur pour effectuer son traitement.

## Revendications

1. Un procédé pour explorer une fenêtre (F) de p lignes de q pixels d'un dispositif à transfert de charges du type à transfert de trames, ce dispositif à transfert de charges comprenant :
    - une zone image (ZI), disposée dans le plan focal d'un dispositif dioptrique, formée d'une matrice de m lignes de n sites photosensibles,
    - une zone mémoire (ZM) adjacente, aveugle, formée d'une matrice de m lignes de n positions mémoire,
    - un registre à décalage (RD) à n positions,
les circuits de balayage de ce dispositif à transfert de charges comprennant :
    - des premiers moyens décaleurs (10), pour effectuer parallèlement dans chaque colonne de la zone image un transfert de charges, ligne par ligne, en direction de la zone mémoire,
    - des seconds moyens décaleurs (20), pour effectuer parallèlement dans chaque colonne de la zone mémoire un transfert de charges, ligne par ligne, en direction du registre à décalage,
    - des troisièmes moyens décaleurs (30), pour effectuer une lecture série du registre à décalage à une fréquence d'échantillonnage donnée, de manière à restituer un signal vidéo (SV) en sortie,
ce procédé étant caractérisé en ce qu'il comprend les étapes successives de :
    - intégration (BO) du flux lumineux frappant les sites photosensibles de la zone image,
    - décalage préalable (B1-B3) des zones image et mémoire de (m + x) lignes, x étant le nombre de lignes séparant la première ligne de la fenêtre de la frontière entre la zone image et la zone mémoire, de manière à amener cette première ligne de la fenêtre adjacente à la frontière entre la zone mémoire et le registre à décalage,
    - exploration séquentielle de la fenêtre, par exécution répétitive, p fois, des étapes (B4) suivantes, à une fréquence de ligne donnée :
        • activation des seconds moyens décaleurs, de manière à décaler la zone mémoire d'une ligne,
        • activation des troisièmes moyens décaleurs, de manière à effectuer la lecture série du contenu du registre à décalage.

2. Procédé selon la revendication 1, caractérisé en ce que l'étape de décalage préalable comprend les étapes suivantes :
        • activation des premiers moyens décaleurs (B1), de manière à décaler la zone image d'un nombre de lignes égal au nombre x de lignes séparant la première ligne de la fenêtre de la frontière entre la zone image et la zone mémoire,
        • activation simultanée des premiers et des seconds moyens décaleurs (B2), de manière à décaler ensemble la zone image et la zone mémoire de p lignes,
        • activation des seconds moyens décaleurs (B3), de manière à décaler la zone mémoire de (m-p) lignes.

3. Procédé selon l'une des revendications 1 et 2, caractérisé en ce que l'étape d'intégration est précédée d'une étape d'effacement des zones image et mémoire, réalisée par activation des premiers et des seconds moyens décaleurs de manière à décaler chacune des zones image et mémoire de m lignes.

4. Procédé selon la revendication 3, caractérisé en ce que le début de l'étape d'effacement est retardé par rapport à la fin de l'étape d'exploration de la fenêtre pour la trame précédente, ce retard étant un retard variable, croissant avec l'intensité moyenne du flux lumineux frappant la fenêtre, de manière à ajuster à cette intensité la durée de l'étape d'intégration consécutive.

5. Procédé selon l'une des revendications 1 à 3, caractérisé en ce que les troisièmes moyens décaleurs peuvent être activés, au cours d'une même lecture du registre à décalage, à deux fréquences de fonctionnement, à savoir une fréquence lente correspondant aux q pixels utiles de la ligne, et une fréquence rapide correspondant aux n-q autres pixels.

6. Procédé selon la revendication 5, caractérisé en ce que la fréquence rapide est double de la fréquence lente.

7. Un circuit de balayage, pour la mise en oeuvre du procédé selon l'une des revendications précédentes, coopérant avec un dispositif à transfert de charges du type à transfert de trames comprenant :
   - une zone image (ZI), disposée dans le plan focal d'un dispositif dioptrique, formée d'une matrice de m lignes de n sites photosensibles, aptes à évaluer, au cours d'une étape d'intégration, l'intensité du flux lumineux qui les frappe,
   - une zone mémoire (ZM) adjacente, aveugle, formée d'une matrice de m lignes de n positions mémoire,
   - un registre à décalage (RD) à n positions,
   ce circuit de balayage comprenant :
   - des premiers moyens décaleurs (10), pour effectuer parallèlement dans chaque colonne de la zone image un transfert de charges, ligne par ligne, en direction de la zone mémoire,
   - des seconds moyens décaleurs (20), pour effectuer parallèlement dans chaque colonne de la zone mémoire un transfert de charges, ligne par ligne, en direction du registre à décalage,
   - des troisièmes moyens décaleurs (30), pour effectuer une lecture série du registre à décalage à une fréquence d'échantillonnage donnée, de manière à restituer un signal vidéo (SV) en sortie,
   ce circuit étant caracterisé en ce qu'il comprend en outre un circuit de cadencement (40), coopérant :
   • avec les premiers et seconds moyens décaleurs dans une première phase, pour réaliser un décalage préalable des zones image et mémoire d'un nombre prédéterminé de lignes,
   • avec les seconds et troisièmes moyens décaleurs dans une seconde phase, de manière à explorer séquentiellement, ligne par ligne, une région de la zone mémoire adjacente au registre à décalage, cette région correspondant à une fenêtre utile (F), de dimensions réduites, initialement contenue à l'intérieur de la zone image.

8. Circuit de balayage selon la revendication 7, caractérisé en ce que le circuit de cadencement coopère également, dans une phase préalable d'effacement précédant l'étape d'intégration, avec les premiers et seconds moyens décaleurs pour réaliser un décalage de chacune des zones image et mémoire de m lignes.

9. Circuit de balayage selon la revendication 8, caractérisé en ce qu'il est prévu en outre des moyens d'adaptation de sensibilité du dispositif, aptes à retarder le début de la phase d'effacement par rapport à la fin de la phase d'exploration de la fenêtre d'une durée variable, croissante avec l'intensité moyenne du flux lumineux frappant la fenêtre, de manière à ajuster à cette intensité la durée de l'étape d'intégration.

10. Circuit de balayage selon l'une des revendications 7 à 9, caractérisé en ce que les troisièmes moyens décaleurs peuvent être activés, au cours d'une même lecture du registre à décalage, à deux fréquences de fonctionnement, à savoir une fréquence lente correspondant aux q pixels utiles de la ligne, et une fréquence rapide correspondant aux n-q autres pixels.

**Claims**

1.  A method of scanning a window of p lines of q pixels in a charge transfer device of the frame transfer type, the charge transfer device comprising:

    an image zone disposed in the focal plane of optical image-producing means, and constituted by a matrix of m lines of n photosensitive sites;

    an adjacent, blind, memory zone constituted by a matrix of m lines of n memory positions; and

    an n position shift register;

    the scanning circuits of this charge transfer device comprising:

    first shifting means for transferring charges line-by-line and in parallel along each column of the image zone towards the memory zone;

    second shifting means for transferring charges line-by-line in parallel along each column of the memory zone towards the shift register; and

    third shifting means for reading the shift register serially at a given sampling frequency in order to reconstitute an output video signal.

    the method including the improvement whereby it comprises the following successive steps:

    integrating the light flux striking the photosensitive sites in the image zone;

    prior shifting the image and memory zones by (m + x) lines, where x is the number of lines between the first line of the window and the boundary between the image zone and the memory zone, in such a manner as to cause said first line of the window to be adjacent to the boundary between the memory zone and the shift register;

    sequentially scanning the window by repeating the following steps p times at a given line frequency:

    actuating the second shifting means in such a manner as to shift the memory zone by one line; and

    actuating the third shifting means in such a manner as to read the contents of the shift register serially.

2.  A method according to claim 1, wherein the prior shifting step comprises the following steps:

    activating the first shifting means in such a manner as to shift the image zone by a number of lines equal to the number x of lines between the first line of the window and the boundary between the image zone and the memory zone;

    simultaneously actuating the first and the second shifting means in such a manner as to shift both the image zone and the memory zone together through p lines; and

activating the second shifting means in such a manner as to shift the memory zone by (m - p) lines.

3.  A method according to any one of claims 1 and 2, wherein the integration step is preceded by an image and memory zone clearing step, performed by activating the first and second shifting means in such a manner as to shift each of said zones through m lines.

4.  A method according to claim 3, wherein the beginning of the clearing step is delayed relative to the end of scanning the window in the previous frame, said delay being variable and increasing with increasing average light flux striking the window, thereby adjusting the duration of the following integration step to said light intensity.

5.  A method according to any one of claims 1 to 3, wherein the third shifting means are capable of being activated during a single shift register read at two operating frequencies, i.e. slow frequency corresponding to the q useful pixels of the line, and a fast frequency corresponding to the n - q other pixels.

6.  A method according to claim 5, wherein the fast frequency is twice the slow frequency.

7.  A scanner circuit for implementing the method according to claim 1, cooperating with a charge transfer device of the frame transfer type comprising:

    an image zone disposed in the focal plane of optical image-producing means, and constituted by a matrix of m lines of n photosensitive sites, suitable for evaluating the intensity of the light flux striking them during an integration step;

    an adjacent, blind, memory zone constituted by a matrix of m lines of n memory positions; and

    an n position shift register; said scanner circuit comprising:

    first shifting means for transferring charges line-by-line and in parallel along each column of the image zone towards the memory zone;

    second shifting means for transferring charges line-by-line in parallel along each column of the memory zone towards the shift register; and

    third shifting means for reading the shift register serially at a given sampling frequency in order to reconstitute an output video signal;

said scanner circuit including the improvement whereby it further includes a driver circuit co-operating:

with the first and second shifting means during a first phase to prior shift the image and memory zones through a predetermine number of lines; and

with the second and third shifting means during a second phase in such a manner as to sequentially scan a region of the memory zone adjacent to the shift register line-by-line, said region corresponding to a useful window of small size and initially contained within the image zone.

8. A scanner circuit according to claim 7, wherein the driver circuit also cooperates during a prior clearing step before the integration step with the first and second shifting means to shift each of the image and memory zones through m lines.

9. A scanner circuit according to claim 8, further provided with means for adapting the sensitivity of the device to the received light flux, said means being suitable for delaying the beginning of the clearing step relative to the end of scanning the window in the previous frame by a variable length of time, said length of time increasing with increasing average light flux striking the window, thereby varying the duration of the integration period to match the received light flux.

10. A scanner circuit according to any one of claims 7 to 9, wherein said third shifting means are capable of being activated, during a single shift register read at two operating frequencies, i.e. slow frequency corresponding to the q useful pixels of the line, and a fast frequency corresponding to the n - q other pixels.

## Patentansprüche

1. Verfahren zum Abtasten eines Fensters (F) mit p Zeilen mit je q Pixeln einer bildorganisierten Ladungsübertragungseinrichtung, wobei diese Ladungsübertragungseinrichtung aufweist:
   - einen Bildbereich (ZI) in der Fokusebene einer dioptrischen Vorrichtung, der in Matrixform mit m Zeilen mit je n lichtempfindlichen Stellen aufgebaut ist,
   - einen angrenzenden Blindspeicherbereich (ZM), der in Matrixform mit m Zeilen mit je n Speicherpositionen aufgebaut ist,
   - ein n-stelliges Schieberegister (RD),

die Abtastschaltkreise dieser Ladungsübertragungseinrichtung aufweisen:
   - eine erste Verschiebevorrichtung (10) für zeilenweise parallele Ladungsverschiebung in jeder Spalte des Bildbereiches in Richtung auf den Speicherbereich zu,
   - eine zweite Verschiebevorrichtung (20) für zeilenweise parallele Ladungsverschiebung in jeder Spalte des Bildbereiches in Richtung auf das Schieberegister zu,
   - eine dritte Verschiebevorrichtung (30) für serielles Lesen des Schieberegisters mit einer gegebenen Sortierfrequenz derart, daß am Ausgang ein Videosignal (SV) ausgegeben wird,

und wobei das Verfahren durch folgende Verfahrensschritte **gekennzeichnet** ist:
   - Integration (B0) des auf die lichtempfindlichen Stellen des Bildbereiches fallenden Lichtstromes,
   - Vor-Verschieben (B1-B3) der (m + x)-zeiligen Bild- und Speicherbereiche, wobei x die Anzahl die die erste Fensterzeile von der Grenze zwischen dem Bildbereich und dem Speicherbereich trennenden Zeilen ist, durch Mitführen dieser ersten an die Grenze zwischen dem Speicherbereich und dem Schieberegister angrenzenden Fensterzeile,
   - sequentielles Abtasten des Fensters durch, p-mal, wiederholtes Ausführen der folgenden Schritte (B4) mit einer gegebenen Zeilenfrequenz:
     - Inbetriebsetzen der zweiten Verschiebevorrichtung zum Verschieben des Speicherbereiches um eine Zeile,
     - Inbetriebsetzen der dritten Verschiebevorrichtung zum seriellen Lesen des Schieberegisterinhaltes.

2. Verfahren nach Anspruch 1, dadurch **gekennzeichnet**, daß die Vor-Verschiebungsschritte die folgenden Verfahrensschritte umfassen:
   - Inbetriebsetzen der ersten Verschiebevorrichtung (B1) derart, daß der Bildbereich um eine Anzahl von Teilen gleich der Anzahl x, der die ersten Fensterzeile von der Grenze zwischen dem Bildbereich und dem Speicherbereich trennenden Linien, verschoben wird,
   - gleichzeitiges Inbetriebsetzen der ersten und zweiten Verschiebevorrichtung (B2) derart, daß der gesamte Bildbereich und der gesamte Speicherbereich um p Zeilen verschoben wird,
   - Inbetriebsetzen der zweiten Verschiebevorrichtung (B3) derart, daß der Speicherbereich um (m - p) Zeilen verschoben wird.

3. Verfahren nach Anspruch 1 oder 2, dadurch **gekennzeichnet**, daß dem Integrationsschritt das Löschen des Bildbereiches und des Speicherbereiches vorangeht, das durch Inbetriebsetzen der ersten und der zweiten Verschiebevorrichtung derart, daß sie sowohl den Bildbereich als auch den Speicherbereich um m Zeilen verschieben, ausgeführt wird.

4. Verfahren nach Anspruch 3, dadurch **gekennzeichnet**, daß der Beginn des Löschvorgangs abhängig vom Ende der Fensterabtastung des vorhergehenden Bildes verzögert ist, wobei diese Verzögerung einstellbar, mit der mittleren Intensität des auf das Fenster fallenden Lichtstromes zunehmend ist derart, daß die Dauer des nachfolgenden Integrationsschrittes an diese Intensität angepaßt wird.

5. Verfahren nach einem der Ansprüche 1 bis 3, dadurch **gekennzeichnet**, daß die dritte Verschiebevorrichtung während ein und desselben Lesens des Schieberegisters mit zwei Betriebsfrequenzen in Betrieb gesetzt werden kann, nämlich einer langsamen Frequenz entsprechend der q Nutzpixel der Zeile und einer schnellen Frequenz entsprechend der (n - q) anderen Pixel.

6. Verfahren nach Anspruch 5, dadurch **gekennzeichnet**, daß die schnelle Frequenz das Doppelte der langsamen Frequenz beträgt.

7. Abtastschaltkreis zum Inbetriebsetzen des Verfahrens nach einem der vorangehenden Ansprüche, der mit einer Einrichtung für die bildorganisierte Ladungsübertragung zusammenwirkt, wobei diese Einrichtung aufweist:
   - einen Bildbereich (ZI) in der Fokusebene einer dioptrischen Vorrichtung, der in Matrixform mit m Zeilen mit je n-lichtempfindlichen Stellen aufgebaut ist, welcher die Intensität des einfallenden Lichtstromes im Laufe eines Integrationsschrittes berechnen kann,
   - einen angrenzenden Blindspeicherbereich (ZM), der in Matrixform mit m Zeilen mit je n Speicherpositionen aufgebaut ist,
   - ein n-stelliges Schieberegister (RD),

   der Abtastschaltkreis aufweist:
   - eine erste Verschiebevorrichtung (10) für zeilenweise parallele Ladungsverschiebung in jeder Spalte des Bildbereiches in Richtung auf den Speicherbereich zu,
   - eine zweite Verschiebevorrichtung (20) für zeilenweise parallele Ladungsverschiebung in jeder Spalte des Speicherbereiches in Richtung auf das Schieberegister zu,
   - eine dritte Verschiebevorrichtung (30) für serielles Lesen des Schieberegisters mit einer gegebenen Sortierfrequenz, derart daß am Ausgang ein Videosignal (SV) ausgegeben wird,

und wobei dieser Schaltkreis dadurch **gekennzeichnet** ist, daß er darüber hinaus einen Taktgeber (40) aufweist, welcher zusammenwirkt:
   - mit der ersten und zweiten Verschiebevorrichtung in einer ersten Phase, um eine Vor-Verschiebung des Bildbereiches und des Speicherbereiches um eine vorgegebene Anzahl von Linien zu bewirken,
   - mit der zweiten und dritten Verschiebevorrichtung in einer zweiten Phase derart, daß ein an das Schieberegister angrenzender Bereich des Speicherbereiches zeilenweise sequentiell abgetastet wird, wobei dieser Bereich einem Nutz-Fenster (F) mit verringerten Abmessungen entspricht, welches ursprünglich im Innern des Bildbereichs enthalten war.

8. Abtastschaltkreis nach Anspruch 7, dadurch **gekennzeichnet**, daß der Taktgeber auch in einer dem Integrationsschritt vorgeschalteten Vor-Löschphase mit der ersten und zweiten Verschiebevorrichtung zusammenwirkt, um eine Verschiebung sowohl des Bildbereiches als auch des Speicherbereiches um m Zeilen zu bewirken.

9. Abtastschaltkreis nach Anspruch 8, dadurch **gekennzeichnet**, daß weiterhin eine Vorrichtung zum Anpassen der Empfindlichkeit der Einrichtung vorgesehen ist, die den Beginn der Löschphase gegenüber dem Ende der Fensterabtastphase um eine variablen Zeitabschnitt verzögern kann, welcher mit der mittleren Intensität des in das Fenster einfallenden Lichtstromes wächst, so daß die Dauer des Integrationsschrittes an diese Intensität angepaßt wird.

10. Abtastschaltkreis nach einem der Ansprüche 7 bis 9, dadurch **gekennzeichnet**, daß die dritte Verschiebevorrichtung während ein und desselben Lesens des Schieberegisters mit zwei Betriebsfrequenzen in Betrieb gesetzt werden kann, nämlich einer langsamen Frequenz entsprechend der $q$ Nutzpixel der Zeile und einer schnellen Frequenz entsprechend der $(n - q)$ anderen Pixel.

EP 0 178 954 B1

FIG.1

FIG_2

FIG_3

EP 0 178 954 B1